Europäisches Patentamt

European Patent Office

Office européen des brevets

(19)

(11) Numéro de publication: **0 021 989**
**B1**

(12) **FASCICULE DE BREVET EUROPEEN**

(45) Date de publication du fascicule du brevet: **08.08.84**

(51) Int. Cl.³: **B 60 R 13/06**

(21) Numéro de dépôt: **80400892.8**

(22) Date de dépôt: **18.06.80**

(54) **Pièces d'étanchéité pour surfaces mobiles.**

(30) Priorité: **19.06.79 FR 7915650**

(43) Date de publication de la demande:
**07.01.81 Bulletin 81/1**

(45) Mention de la délivrance du brevet:
**08.08.84 Bulletin 84/32**

(84) Etats contractants désignés:
**BE CH DE GB IT LI NL**

(56) Documents cités:
**DE - A - 1 555 062**
**FR - A - 1 342 216**

(73) Titulaire: **HUTCHINSON-MAPA**
**2, rue Balzac**
**F-75008 Paris (FR)**

(72) Inventeur: **Baud, René**
**Les Mésanges Rue Léo Delard**
**F-38430 Moirans (FR)**
Inventeur: **Faure, Joseph**
**Hauteport Saint-Nicolas de Macherin**
**F-38500 Voiron (FR)**

(74) Mandataire: **Ores, Irène et al,**
**CABINET ORES 6, Avenue de Messine**
**F-75008 Paris (FR)**

Courier Press, Leamington Spa, England.

## Description

La présente invention est relative à des pièces d'étanchéité pour des surfaces qui peuvent être animées d'un mouvement relatif, telles que vitres, en particulier d'automobiles, surfaces métalliques et analogues.

Un grand nombre de joints d'étanchéité pour vitres de voitures a été proposé conformément à l'Art antérieur pour résoudre le double problème posé par la nécessité d'assurer l'étanchéité de la surface mobile vis-à-vis des agents extérieurs, et notamment de la pluie, à sa jonction avec le châssis fixe dans lequel elle est montée, sand cependant gêner le coulissement de la surface mobile pendant son mouvement relatif par rapport au châssis fixe. Les solutions proposées à ces deux problèmes dans l'Art antérieur ont abouti à la mise sur le marché de joints d'étanchéité comprenant essentiellement une lèvre d'étanchéité portée par un talon comportant éventuellement une armature, laquelle lèvre d'étanchéité s'applique contre la surface mobile; toutefois, comme une telle application a tendance à freiner le coulissement de la surface mobile, on a cherché à améliorer l'aptitude au glissement de la lèvre d'étanchéité soit en la soumettant à un traitement chimique tel que traitement de fluoration ou de chloration, soit en la revêtant d'un flocage. Si les lévres en caoutchouc naturel assurent une bonne étanchéité, leur adhérence est trop grande et elles freinent le coulissement de la surface mobile; par contre, la fluoration ou la chloration, qui améliorent l'aptitude au glissement de la lèvre, sont des traitements chimiques difficiles à maîtriser, que donnent lieu à une couche mince dont la tenue dans le temps est aléatoire et qui subit assez rapidement sous l'effet du frottement de la surface mobile, une usure susceptible de provoquer sa disparition. En ce que concerne le flocage, son applcation requiert un appareillage coûteux; de plus, par l'effet de capillarité, en cas de pluie, il a une incidence défavourable sur l'étanchéité.

Il a également été proposé d'utiliser des joints d'étanchéité à lèvre rigide, dont les propriétés de glissement sont généralement bonnes; toutefois, ce type de lèvre n'assure pas une bonne étanchéité car elle ne compense pas les défauts de planéité de la surface mobile (glace, tôle, etc.). Il a, en outre, été proposé de pourvoir les vitres de voitures, de joints d'étanchéité dont le pied de fixation porte une lèvre de section tubulaire dont la partie en contact avec la surface mobile est pourvue d'un flocage, l'étanchéité étant assurée par la compression que fait subir la surface en mouvement à la lèvre tubulaire; toutefois, un tel joint d'étanchéité est également d'un prix de revient élevé et conserve les inconvénients du flocage.

La présente invention s'est en conséquence donné pour but de pourvoir à des pièces d'étanchéité pour surfaces susceptibles d'être animées d'un mouvement de coulissement par rapport au châssis fixe dans lequel elles sont montées, qui répondent mieux aux nécessités de la pratique que les joints d'étanchéité connus dans l'Art antérieur, notamment en ce qu'elles procurent une étanchéité parfaite tout en présentant une excellente aptitude au glissement, qui permet à ladite surface de se déplacer sans gêne, et en ce qu'elles sont fabriquées par extrusion, sand opérations complémentaires telles que traitements chimiques ou flocage.

Par rapport au FR—A—1342216 qui de'crit dijù une pièce d'étanchéité pour une surface mobile par rapport à un châssis fixe dans lequel elle est montée, comprenant un talon de fixation en élastomère ou en plastomère dur et une lèvre d'étanchéitè en élastomère ou en plastomère souple, la presente invention est caractérisée en ce que ladite lèvre en matériau élastomère ou plastomère souple dont la durité Shore A est de 75 au plus, est pourvue dans sa zone de contact avec la surface mobile, d'au moins une strie réalisée en un élastomère ou un plastomère dur, à faible coefficient de friction et en ce que la différence de dureté, exprimée en dureté Shore A, entre la lèvre en matériau souple et les stries en matériau dur est de l'ordre de 30.

La disposition, en combinaison, de stries en élastomère ou en plastomère dur et d'une lèvre d'étanchéité en élastomère ou plastomère souple présente l'avantage important et déterminant d'associer l'avantage que procure l'utilisation d'un élastomère ou plastomère dur, c'est-à-dire un faible coefficient de friction, avec l'avantage que procure l'utilisation d'un élastomère ou plastomère souple, c'est-à-dire l'étanchéité. En effet, la faible section des stries en matériau dur réduit suffisamment leur regidité pour que l'élasticité de la lèvre souple puisse leur imposer les déformations correspondant aux défauts de planéité des surfaces en contact.

Selon un mode de réalisation avantageux de la pièce d'étanchéité conforme à la présente invention, le talon de fixation est dur, et, selon une disposition avantageuse de ce mode de réalisation, la rigidité du talon est obtenue en réalisant ce dernier en un matériau élastomère ou plastomère dur dont la dureté Shore est de l'ordre de 90 Shore A et/ou en pourvoyant celui-ci d'une armature, métallique par exemple.

Selon un autre mode de réalisation avantageux de la pièce d'étanchéité conforme à l'invention, la lèvre d'étanchéité fait avec le talon de fixation, un angle obtus compris entre 105° et 135° environ.

Selon encore un autre mode de réalisation avantageux de la pièce d'étanchéité conforme à l'invention, la lèvre d'étanchéité est articulée par rapport au talon de fixation, par l'intermédiaire d'une rainure d'articulation ménagée sensiblement à la jonction de ladite lèvre avec le talon de fixation.

Conformément à une caractéristique de l'invention, la pièce d'étanchéité réalisée en matériau élastomère ou plastomère polycomposant, dur pour le talon de fixation, souple pour la lèvre d'étanchéité et dur pour la/ou les stries portée(s) par cette dernière, est produite par extrusion.

Conformément à une autre caractéristique de l'invention, la ou les stries présente(nt) une section appropriée propre à assurer un contact efficace avec la surface mobile, telle qu'une section circulaire ou bien une section semi-circulaire, triangulaire ou autre.

La disposition de stries de contact avec la surface mobile sur la lèvre d'étanchéité, procure à la pièce d'étanchéité conforme à l'invention, une excellente aptitude au glissement, qui permet le coulissement de la surface mobile sans freinage, sans pour autant porter préjudice à l'étanchéité, les propriétés de glissement et d'étanchéité demeurant pratiquement inaltérées dans le temps. De plus, le procédé de fabrication de la pièce d'étanchéité en matériau élastomère ou plastomère polycomposant, conforme à l'invention, par extrusion et sans opération complémentaire, est moins complexe et moins onéreux que les procédés de fabrication comportant des opérations complémentaires, proposées dans l'Art antérieur.

L'invention sera mieux comprise à l'aide du complément de description qui va suivre, qui se réfère au dessin annexé dans lequel:

— la figure 1 est une vue en coupe d'un mode de réalisation d'une pièce d'étanchéité conforme à l'invention, plus particulièrement destinée à assurer l'étanchéité d'une vitre de portière de voiture, et
— la figure 2 et la figure 3 sont des vues en coupe d'autres modes de réalisation d'une pièce d'étanchéité conforme à l'invention, plus particulièrement destinée à assurer l'étanchéité entre des châssis métalliques coulissants.

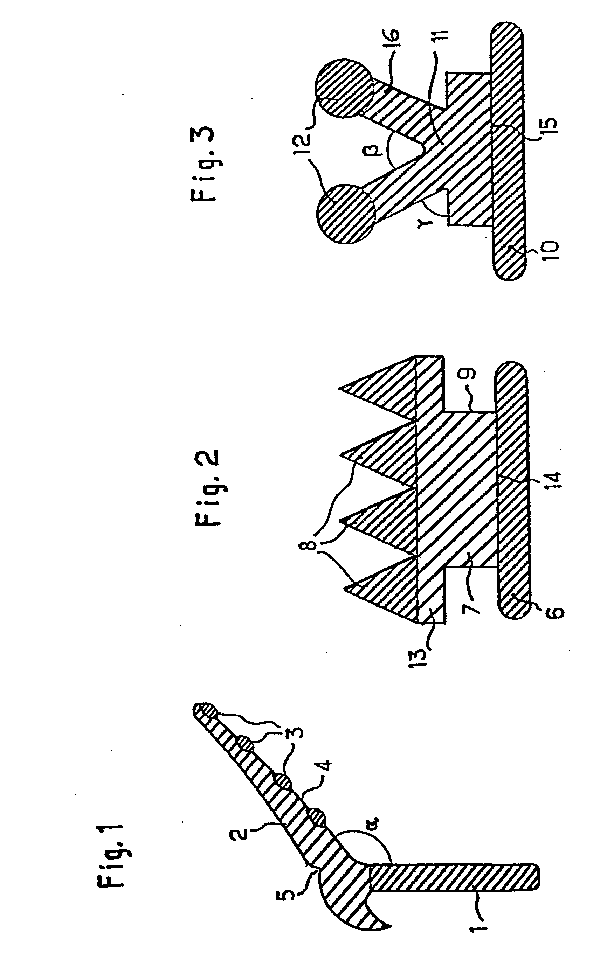

La pièce d'étanchéité représentée à la figure 1 comporte un talon de fixation 1 en caoutchouc dur, dont la dureté Shore A peut être de l'ordre de 95 par exemple, qui porte une lèvre d'étanchéité 2 en caoutchouc souple de dureté Shore A qui peut être de l'ordre de 60 par exemple, 70 au plus, laquelle fait avec le talon 1 un angle obtus $\alpha$ de préférence de l'ordre de 105° et plus, jusqu'à 135° par exemple. La lèvre 2 présente avantageusement un profil d'épaisseur décroissante de la zone de jonction avec le talon 1 à son extrémité. Dans la zone de contact de la lèvre 2 avec la surface mobile, ladite lèvre porte des stries 3 en caoutchouc très dur à faible coefficient de friction, de dureté Shore A de l'ordre de 95 par exemple.

Selon un mode de réalisation avantageous, la lèvre 2 peut ne porter qu'une seule strie 3 à son extrémité libre, l'angle $\alpha$ que fait la lèvre 2 avec le talon 1 et le profil de la lèvre 2 étant calculés de telle manière que seule la strie 3 d'extrémité se trouve normalement en contact avec la surface mobile (non représentée).

Toutefois, en fonction du choix de l'angle $\alpha$ et du profil de la lèvre 2, deux stries d'extrémité 3 consécutives peuvent se trouver normalement en contact avec la surface mobile. Il est cependant également avantageous de pourvoir la lèvre 2 d'une pluralité de stries 3, quatre par exemple, comme représente à la figure 1, dont deux au moins, les plus proches de la jonction de la lèvre 2 avec le talon 1, ne sont pas normalement en contact avec la surface mobile, sur laquelle elles ne s'appliquent qu'en cas de pression extérieure, due à la vitesse en particulier. La lèvre 2 est articulée par rapport au talon 1, grâce à la disposition d'une rainure d'articulation 5 sensiblement au niveau de la jonction de la lèvre 2 avec le talon 1.

Les stries présentent toute forme appropriée convenable, semi-circulaire, circulaire, triangulaire, etc.

La pièce d'étanchéité conforme à l'invention peut être fixée par l'intermédiaire de sou talon 1, dans le châssis fixe (non représenté) dans lequel coulisse la surface mobile telle que vitre par exemple, par tous moyens appropriés et notamment par clippage, agrafage, compression dans une rainure, etc.

La rigidité du talon 1 peut être obtenue, en cas de besoin, soit en choisissant un matériau dur, soit/et en incorporant une armature métallique dans ledit talon.

La pièce d'étanchéité conforme à l'invention, obtenue par extrusion, allie l'avantage de la rigidité du talon de fixation à celui de la souplesse de la lèvre 2 qui assure l'étanchéité et à celui que procure dans la zone de contact avec la surface mobile, la présence des stries 3 rigides, de faible superficie et de faible section, qui assurent un coefficient de frottement sensiblement amélioré par rapport aux diverses solutions proposées dans l'Art antérieur.

La pièce d'étanchéité représentée à la Figure 1 et décrite dans ce qui précède, convient particulièrement bien à l'usage en tant que lèche-vitre de portière de voiture automobile, que assure une excellente étanchéité à l'eau.

Les pièces d'étanchéité représentées aux Figures 2 et 3 conviennent particulièrement, mais non limitativement, en tant que garnitures d'étanchéité de châssis métalliques coulissants.

La pièce d'étanchéité représentée à la Figure 2 comporte un talon 6 en caoutchouc dur de dureté Shore A 95 par exemple, qui porte un bloc 7 en caoutchouc souple de dureté Shore A 60 par exemple, dont la surface 13 opposée à sa surface de jonction 14 avec le talon 6, porte des stries 8 en caoutchouc dur de dureté Shore A 95 par exemple. Bien que, dans l'exemple représenté à la Figure 2, les stries présentent une forme triangulaire, on comprendra aisément qu'elles peuvent présenter toute forme appropriée voulue, Sur sa hauteur, le bloc 7 comporte de part et d'autre, un décrochement 9 par rapport au talon 6 et à la surface 13 supportant les stries 8, lequel déchrochement est destiné à la mise en place par glissement dans un logement adéquat, sur le châssis métallique fixe, non représenté.

La pièce d'étanchéité représenté à la Figure 3 comporte un talon 10 en caoutchouc dur de dureté Shore A 95, par exemple, par l'intermédiaire duquel elle est maintenue dans le châssis fixe (non représenté) et un bloc 11 en caoutchouc souple, de dureté Shore A 60 par exemple, que porte deux lèvres 16, réalisées en le même matériau, qui font respectivement avec le bloc 11 un angle aigu $\gamma$ et entre elles un angle aigu $\beta$. Chacune des deux lèvres 16 porte à son extrémité au moins une strie 12 en caoutchouc dur de dureté Shore A 95 par exemple.

Le choix des angles $\gamma$ et $\beta$ est déterminant pour assurer l'efficacité optimale des stries 12 en tant que moyens favorisant à la fois le glissement du châssis métallique mobile et l'étanchéité recherchée.

Conformément à l'invention, la valeur de l'angle $\gamma$ est avantageusement comprise entre 55 et 75° environ, et la valeur de l'angle $\beta$ est avantageusement comprise entre 45 et 65° environ, ces valuers constituant des optimums dont il est possible de s'écarter tout en restant dans le cadre de la présente invention.

L'on comprendre aisément que les gammes de dureté Shore A indiquées dans ce qui précède sont des valeurs préférées, étant entendu que c'est essentiellement par la différence de dureté entre la lèvre et les stries, qui est de préférence de l'ordre de 30, exprimés en dureté Shore A que se distinque l'invention. C'est ainsi que si en raison de contraintes particulières, la lèvre devait présenter une très faible dureté Shore A, par exemple 30, en pareil cas, l'amélioration de la glissance pourrait être apportée par la disposition de stries de dureté Shore A égale 60 environ, par exemple.

Il résulte de ce qui précède que, quels que soient les modes de réalisation et d'application adoptés, l'on obtient des pièces d'étanchéité pour surface mobiles, qui assurent en même temps une excellents étanchéité à l'eau des surfaces mobiles telles que vitres, surfaces métalliques et analogues, par rapport au chässis fixe dans lequel elles sont montées, et un glissement parfait des surfaces mobiles, qualités conjointes que ne permettaient pas d'atteindre, tout au moins au même degré, les joints d'étanchéité connus dans l'Art antérieur.

## Revendications

1. Pièce d'étanchéité pour une surface mobile par rapport à un châssis fixe dans lequel elle est montée, comprenant un talon de fixation (1, 6, 10) en élastomère ou en plastomère dur et une lèvre d'étanchéité (2, 7, 16) en élastomère ou en plastomère souple, caractérisée en ce que ladite lèvre (2, 7, 16) en matériau élastomère ou plastomère souple, dont la dureté Shore A est de 75 au plus, est pourvue dans sa zone de contact avec la surface mobile, d'au moins une strie (3, 8, 12) réalisée en un élastomère ou un plastomère dur à faible coefficient de friction et en ce que la différence de dureté, exprimée en dureté Shore A, entre la lèvre (2) en matériau souple et les stries (3, 8, 12) en matériau dur, est de l'ordre de 30.

2. Pièce d'étanchéité selon la Revendication 1, caractérisée en ce que le talon (1, 6, 10) de ladite pièce est rigide et en ce que sa rigidité est obtenue en réalisant ce dernier en un élastomère ou en un plastomère dur dont la dureté Shore A est de l'ordre de 95.

3. Pièce d'étanchéité selon la Revendication 1, caractérisée en ce que la rigidité du talon (1, 6, 10) est obtenue en pourvoyant ce dernier d'une armature métallique.

4. Pièce d'étanchéité selon l'une quelconque des Revendications 1 à 3, caractérisée en ce que la lèvre d'étanchéité (2) est articulée par rapport au talon de fixation (1), par l'intermédiaire d'une rainure d'articulation (5) ménagée sensiblement à la jonction de ladite lèvre avec le talon de fixation.

5. Pièce d'étanchéité selon l'une quelconque des Revendications 1 à 4, caractérisée en ce que la lèvre d'étanchéité (2) fait avec le talon de fixation (1) un angle obtus compris entre 105 et 135° environ.

6. Pièce d'étanchéité selon l'une quelconque des Revendications 1 à 5, caractérisée en ce qu'elle comporte au niveau de la lèvre d'étanchéité en matériau souple, des décrochements (9) destinés à la mise efsplace de la pièce d'étanchéité dans un logement correspondant porté par le châssis fixe.

7. Pièce d'étanchéité selon l'une quelconque des Revendications 1 à 5, caractérisée en ce que la lèvre d'étanchéité qu'elle comporte comprend un bloc (11) qui porte deux lévres (16) orientées dans des directions divergentes, l'angle $\gamma$ que font lesdites lèvres (16) avec le bloc (11) étant compris entre 55° et 75° environ, et l'angle $\beta$ que font lesdites lèvres (16) entre elles étant compris entre 45° et 65° environ.

8. Pièce d'étanchéité selon l'une quelconque des Revendications 1 à 7, caractérisée en ce qu'elle est obtenu par extrusion.

## Patentansprüche

1. Abdichtungsteil für eine bewegliche Oberfläche bezüglich einem festen Chassis, in dem es montiert ist, umfassend einen Befestigungsansatz (1, 6, 10) aus hertem Elastomer oder Polastomer und eine Abdichtungslippe (2, 7, 16) aus schmiegsamem Elastomer oder Plastomer, dadurch gekennzeichnet, daß die Lippe (2, 7, 16) aus schmiegsamem Elastomer- oder Plastomermaterial, dessen Härte Shore A höchstens 75 beträgt, in ihrem Kontaktbereich mit der beweglichen Oberfläche mit wenigstens einem Streifen (3, 8, 12) versehen ist, der aus

einem harten Elastomer oder Plastomer mit geringem Reibungskoeffizienten ausgebildet ist, und daß der Härteunterschied, ausgedrückt in Härte Shore A, zwischen der Lippe (2) aus schmiegsamem Material und den Streifen (3, 8, 12) aus hartem Material in der Größenordnung von 30 liegt.

2. Abdichtungsteil nach Anspruch 1, dadurch gekennzeichnet, daß der Ansatz (1, 6, 10) dieses Teils steif ist, und daß seine Steifigkeit dadurch erzielt ist, daß letzterer aus einem harten Elastomer oder Plastomer ausgebildet ist, dessen Härte Shore A in der Größenordnung von 95 liegt.

3. Abdichtungsteil nach Anspruch 1, dadurch gekennzeichnet, daß die Steifigkeit des Ansatzes (1, 6, 10) dadurch erzielt ist, daß letzterer mit einer metallischen Armatur versehen ist.

4. Abdichtungsteil nach einem der Ansprüche 1 bis 3, dadurch gekennzeichnet, daß die Abdichtungslippe (2) in Bezug auf den Befestigungsansatz (1) mittels eines Gelenkeinschnitts (5), der im wesentlichen an der Verbindungsstelle dieser Lippe mit dem Befestigungsansatz ausgespart ist, gelenkig angebracht ist.

5. Abdichtungsteil nach einem der Ansprüche 1 bis 4, dadurch gekennzeichnet, daß die Abdichtungslippe (2) mit dem Befestigungsansatz (1) einen stumpfen Winkel zwischen ungefähr 105 und 135° einschließt.

6. Abdichtungssteil nach einem der Ansprüche 1 bis 5, dadurch gekennzeichnet, daß es auf dem Niveau der Abdichtungslippe aus schmiegsamem Material Absätze (9) umfaßt, die zum Anbringen des Abdichtungssteils an Ort und Stelle in einer entsprechenden Lagerung bestimmt sind, welche von dem festen Chassis getragen wird.

7. Abdichtungsteil nach einem der Ansprüche 1 bis 5, dadurch gekennzeichnet, daß die Abdichtungslippe, die es aufweist, einen Block (11) umfaßt, der zwei Lippen (16) trägt, die in divergenten Richtungen ausgerichtet sind, wobei der Winkel $\gamma$, den diese Lippen (16) mit dem Block (11) einschließen, zwischen ungefähr 55° und 75° beträgt, und wobei der Winkel $\beta$, den diese Lippen (16) miteinander einschließen, zwischen ungefähr 45° und 65° beträgt.

8. Abdichtungsteil nach einem der Ansprüche 1 bis 7, dadurch gekennzeichnet, daß es durch Extrusion hergestellt ist.

## Claims

1. A sealing component for a surface which can move relative to a fixed frame in which it is mounted, comprising a fixing heel (1, 6, 10) made of hard elastomer or plastomer and a sealing lip (2, 7, 16) made of flexible elastomer or plastomer, characterised in that the said lip (2, 7, 16) made of flexible elastomeric or plastomeric material, the Shore A hardness of which is at most 75, is provided, in its zone of contact with the movable surface, with at least one rib (3, 8, 12) made of a hard elastomer or plastomer of low coefficient of friction, and in that the difference in hardness, expressed as Shore A hardness, between the lip (2) made of flexible material and the ribs (3, 8, 12) made of hard material is of the order of 30.

2. The sealing component according to Claim 1, characterised in that the heel (1, 6, 10) of the said component is rigid and in that its rigidity is obtained by making it from a hard elastomer or plastomer, the Shore A hardness of which is of the order of 95.

3. The sealing component according to Claim 1, characterised in that the rigidity of the heel (1, 6, 10) is obtained by providing it with a metal reinforcement.

4. The sealing component according to any one of Claims 1 to 3, characterised in that the sealing lip (2) is articulated relative to the fixing heel (1) by means of an articulation groove (5) created essentially at the junction between the said lip and the fixing heel.

5. The sealing component according to any one of Claims 1 to 4, characterised in that the sealing lip (2) forms an obtuse angle of between about 105 and 135° with the fixing heel (1).

6. The sealing component according to any one of Claims 1 to 5, characterised in that it possesses, in the region of the sealing lip made of flexible material, steps (9) intended for positioning the sealing component in a corresponding housing carried by the fixed frame.

7. The sealing component according to any one of Claims 1 to 5, characterised in that its sealing lip comprises a block (11) which carries two lips (16) orientated in diverging directions, the angle $\gamma$ formed by the said lips (16) with the block (11) being between about 55° and 75° and the angle $\beta$ formed between the said lips (16) being between about 45° and 65°.

8. The sealing component according to any one of Claims 1 to 7, characterised in that it is obtained by extrusion.

Fig. 1

Fig. 2

Fig. 3

0 021 989